# EUROPEAN PATENT APPLICATION

(11) **EP 1 568 535 A2**
(43) Date of publication of application: **31.08.2005**
(21) Application number: 05075447.2
(22) Date of filing: 24.02.2005
(51) Int. Cl.: B60N 2/12, B60N 2/08

(54) **Seat sliding device for vehicle**

(30) Priority: 24.02.2004 JP 2004048189; 25.03.2004 JP 2004088175
(71) Applicant: AISIN SEIKI KABUSHIKI KAISHA, Aichi-ken 448-8650 (JP)
(72) Inventor: Nihonmatsu, Hideo, c/o Aisin Engineering Co., Ltd., Kariya, Aichi 448-8605 (JP); Kojima, Yasuhiro, c/o Intell. Prop. Dpt., Kariya-shi, Aichi-ken 448-8650 (JP); Yamada, Yukifumi, c/o Intell. Prop. Dpt., Kariya-shi, Aichiken 448-8650 (JP)
(74) Representative: Marshall, John Grahame

(57) **Abstract**

A seat sliding device for a vehicle (1) for unlocking or retaining an unlocked state of a pair of movable rails (4, 35) that supports a seat (3) relative to a pair of fixed rails (2, 34) either by tilting a seat back (31) in a forward direction or by operating an operating handle (18). The seat sliding device comprises a link mechanism (36) provided at one cooperating pair of the rails and a lock mechanism provided at the other cooperating pair of the rails, wherein after the seat (30) is moved in the forward direction with the seat back (31) being turned forward, the link mechanism (36) makes the lock mechanism (1) inoperative so that the seat (30) can be moved in a rearward direction regardless of the upright or tilted state of the seat back (31).

## Description

### FIELD OF THE INVENTION

This invention generally relates to a seat sliding device for a vehicle.

### BACKGROUND

In order to make it easy for a passenger to either leave a vehicle from a rear seat or to enter a vehicle and sit in a rear seat (i.e. walk-in operation), it is known to tilt forward the back of a front seat and then to move whole of said seat in the forward direction. Tilting forward the back of the front seat releases a locked state (i.e. engaging state) of an upper rail, which supports the seat, relative to a lower rail, which is fixed to the vehicle, and thus enables the front seat to be moved in the forward direction. In addition, the original position of the front seat is stored (a memory function) so that the seat can be returned to that position after the passenger has taken their seat or left the vehicle. Such seat sliding devices are disclosed in US5688026 and US6227596.

According to the seat sliding devices disclosed in the above publications, the front seat may be returned to the stored original position, where a memory retaining runner is locked (i.e. engaged) relative to the lower rail, after the passenger has taken their seat or left the vehicle only when the back of the front seat is still tilted forwards. This is because in the above devices the slide operation of the upper rail relative to the lower rail is prohibited when the back of the front seat is in the upright position. Thus if the back of the front seat is returned to the upright position when the seat is in a forward position relative to the memory retaining runner it is possible for the seat to be locked in this forward position. In such cases, the engagement of the memory retaining runner relative to the lower rail is released through subsequent normal operation of the front seat.

When the back of the front seat is returned to the upright position when the seat is in a forward position relative to the memory retaining runner the seat is prohibited from moving. That is, the sliding operation of the front seat is restricted. In this state, there may not be sufficient space in front of the front seat for a passenger to access the seat. Thus, preferably the sliding operation of the front seat should be permitted by the operation of an operating handle so that the seat may be moved to a position where the passenger can access the seat.

In addition, according to the seat sliding devices disclosed in the above publications, the back of the front seat can be returned to the upright position when the seat is in a position forward of the position of the memory retaining runner, where the locked state of the sliding operation of the seat is obtained, in order to delete the memory of the original seat position. During this operation if the memory retaining runner disengages rapidly from the lower rail the lock mechanism of the memory retaining runner may be damaged, even if the engagement of the memory retaining runner with the lower rail is not strong. Furthermore, since a large force is exerted on the memory retaining runner by rearward movement of the seat, during such movement the memory retaining runner and the memory lock mechanism may be damaged and malfunction.

### SUMMARY OF THE INVENTION

The invention provides a seat sliding device for a vehicle as described in claim 1.

According to this invention, if the back of the seat has been returned to the upright position when the seat was in a position forward of the memory retaining runner the seat may still easily be moved back to a position where there is enough space in front of the seat for a passenger to access or leave the seat. Thus, the locked state of the upper rail relative to the lower rail need not be released by operating the operating handle.
According to another aspect of the present invention there may be provided a seat sliding device wherein the lock mechanism is also a memory mechanism and is provided on an upper rail slidable relative to a lower rail fixed to a vehicle floor and includes an operating handle for engaging or disengaging the upper rail relative to the lower rail so that the upper rail and the lower rail enter a locked state or an unlocked state, a frame fixed to the upper rail and a memory retaining runner including a memory lock that receives a biasing force from a biasing means and is slidable relative to a memory rail in the longitudinal direction of the vehicle. Wherein said memory retaining runner is biased in the vehicle forward direction by a spring engaging with both said memory rail and said memory retaining runner and wherein the memory rail is fixed to the lower rail and contains a plurality of bores used for memorizing a seat position. The memory and lock mechanism being characterized in that the lock mechanism further includes a first link rotatably connected to the frame and able to make contact with the memory retaining runner, a second link and a third link connected to the frame by means of a fourth pin and which may be rotated in a predetermined direction by the tilting the back of the seat forwards. Wherein the third link has a first pin fixed to it and includes an elongated bore within which the fourth pin is positioned. Furthermore, the lock mechanism also includes a fourth link rotatably connected to the frame by means of a rod and including an operating portion at one end which makes contact with the operating handle and a portion at the opposing end which makes contact with the first pin; wherein the rod is also rotatably connected to a sixth link which is able to make contact with the memory lock and wherein the lock mechanism also includes a fifth link rotatably connected to the frame and including a portion which makes contact with a second pin which is fixed to the fourth link, and a seventh link rotatably connected to the frame and including an elongated bore at one end which receives a third pin which is connected to the second link and wherein the opposing end of said seventh link is rotatably connected to the fifth link.

According to this aspect of the present invention, when returning the seat to its original position after walk in operation the seat is stopped in a substantially middle portion on the lower rail. This occurs even if the back of the seat is returned to the upright position when the seat is forward of the memory runner and then the seat is moved backward. Therefore, the memory lock may not be damaged. In addition, movement of the position of the memory retaining runner due to vibration of the vehicle, or any error in memory position, may not occur. Furthermore, even if the back of the seat returned to the upright position when the seat is in a position forward of the memory runner and then the seat is moved backward through normal operation of the seat slide device, the first link makes contact with the memory retaining runner, thereby avoiding damage to the memory lock.

According to another aspect of the present invention there may be a seat sliding device for a vehicle wherein said lock mechanism is also a memory mechanism and includes a memory retaining runner provided at a fixed rail so as to be slidable in the longitudinal direction thereof and to which a memory lock, which is engagable relative to the fixed rail in response to a movement of an operating link, is rotatably connected and a frame fixed to a movable rail and rotatably connected to the operating link and a locking link, which is rotatably connected to the frame, characterized in that one end of said operating link interlocks with an operating handle for engaging or disengaging the movable rail relative to the fixed rail, and the other end of the operating link interlocks with the back of said seat in such a manner that said operating link is operated by the tilting of said back of said seat. Wherein the memory retaining runner is connected to a spring for biasing the memory retaining runner in a predetermined direction and is able to make contact with said locking link such that the memory retaining runner is held on the movable rail by said locking link and said spring and is also held on the fixed rail when the memory retaining runner engages with a memory rail which is provided at the fixed rail.

According to this aspect of the invention, the memory retaining runner can be held on a side of the fixed rail by the memory lock, thereby safely maintaining the memory retaining runner in the memory position. In addition, a seat that has been moved forward to facilitate walk-in operation can be stopped on a middle portion of the lower rail and thus the passenger may easily access the front seat (passenger seat, for example) during the walk-in operation.

### BRIEF DESCRIPTION OF THE DRAWINGS

The foregoing and additional features and characteristics of the present invention will become more apparent from the following detailed description considered with reference to the accompanying drawings, wherein:

Fig. 1 is a perspective view of a memory and lock mechansim for a vehicle according to an embodiment of the vehicle seat slide device in which the forward direction of the vehicle is the direction that extends from the upper right corner of the figure to the lower left corner;

Fig. 2 is a side view of Fig. 1;

Fig. 3 is an explanatory view of an example of the rearward (return) movement of the seat;

Fig. 4 is an explanatory view of another example of a rearward (return) movement of the seat;

Fig. 5 is an explanatory view of a further example of a rearward (return) movement of the seat;

Fig. 6 is an explanatory view of a further example of a rearward (return) movement of the seat;

Fig. 7 is a side view showing a normal state of the seat;

Fig. 8 is a side view showing a state in which the back of the seat is tilted forward;

Fig. 9 is a side view showing a state in which the seat has been moved in forward direction with the back of the seat tilted forward;

Fig. 10 is a side view showing a state in which the seat has been returned to a memory position with the back of the seat tilted forward;

Fig. 11 is a side view showing a state in which the seat is in the same position as Fig. 10 and the back of the seat has been returned to the upright position;

Fig. 12 is a side view showing a state in which the back of the seat has been returned to the upright position before the seat has been moved back to the memory position;

Fig. 13 is a perspective view of a link mechanism for a vehicle according an embodiment of the vehicle seat slide device;

Fig. 14 is a side view of the link mechanism;

Fig. 15 is a side view showing the link mechanism in a state in which the back of the seat has been tilted forward;

Fig. 16 is a side view showing the link mechanism showing a state in which the seat has been moved forward with its back tilted forwards for the purposes of a walk-in operation;

Fig. 17 is a side view of the link mechanism in a state in which the seat is being returned to the memory position with its back tilted forwards;

Fig. 18 is a side view of the link mechanism in a state in which the seat has returned to the memory position; and

Fig. 19 is a side view of the link mechanism in a state in which the seat is being moved rearward after the back of the seat has been returned to the upright position.

### DETAILED DESCRIPTION

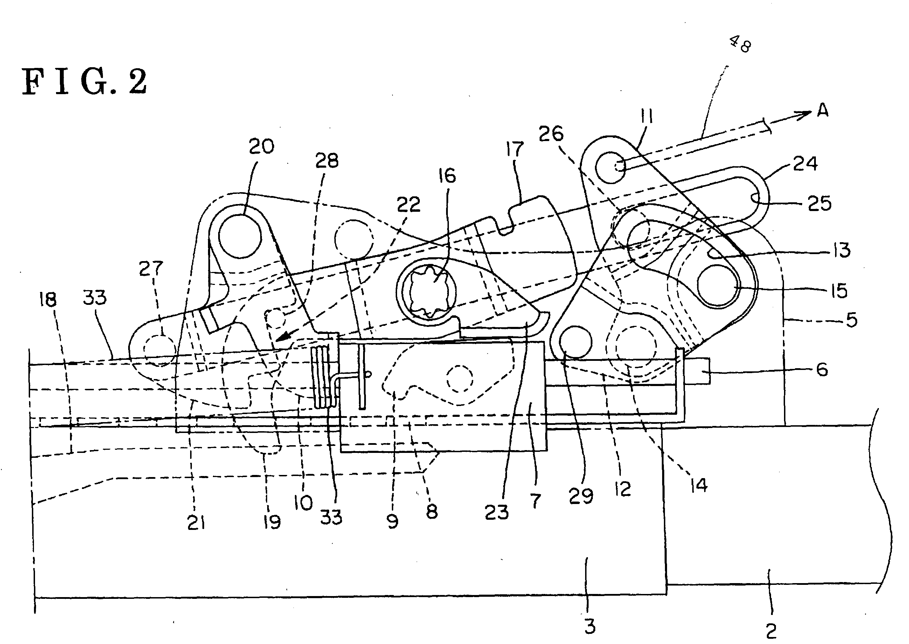

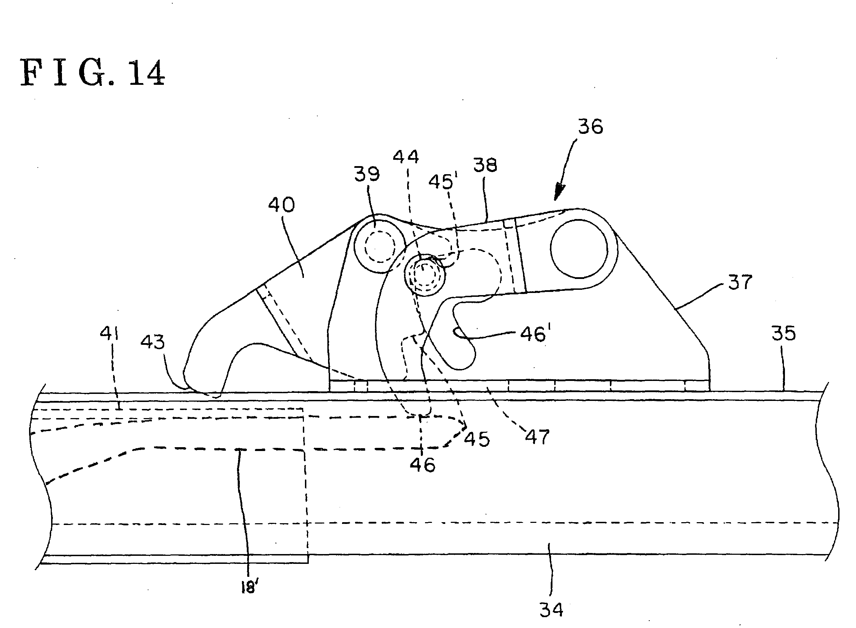

An embodiment of the present invention is explained with reference to the attached drawings. The vehicle seat is supported on the vehicle seat sliding device wherein the vehicle seat sliding device comprises a memory and lock mechansim 1 and one of a pair of linked operating handles 18 provided on one of a pair of parallel rails and a link mechanism 36 and the other of the pair of linked operating handles 18' provided on the other of the pair of parallel rails, wherein said memory and lock mechansim 1 and link mechanism 36 are joined by a rod 16, each of said pair of parallel rails comprises a lower rail 2 and 34 and an upper rail 4 and 35 fixed in and slidable relative to said lower rail 2 and 34 and said pair of linked operating handles 18 and 18' operate an engagement/disengagement device (not shown). The engagement/disengagement device locks the upper rails 4 and 35 to the lower rails 2 and 34 or enables the upper rails 4 and 35 to slide relative to the lower rails 2 and 34 depending on the orientation of the operating handles 18 and 18'. For example when the operating handle 18 is in the position shown in Fig. 2 and the other operating handle 18' is in the position shown in Figure 14 the upper rails 4 and 35 are locked to the lower rails 2 and 34 respectively. Moving the operating handle 18 downward from this position moves the other linked operating handle 18' in the same manner and disengages the upper rails 4 and 35 from the lower rails 2 and 34. Likewise moving the other operating handle 18' downward from the position shown in Figure 14 moves the operating handle 18 in the same manner and disengages the upper rails 4 and 35 from the lower rails 2 and 34

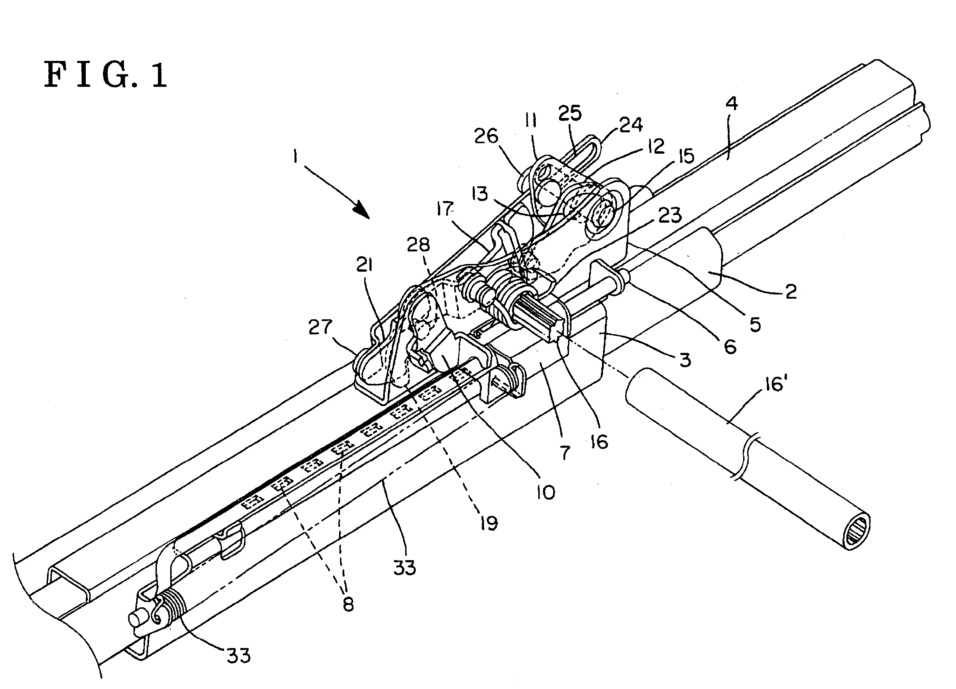

As stated above the memory and lock mechansim 1, as shown in Figs. 1 and 2, is provided on one of a pair of parallel rails fixed to a vehicle floor wherein said one of a pair of parallel rails comprises, a lower rail 2 and one of a pair of upper rails 4 fixed in and slidable relative to the lower rail 2. The memory and lock mechansim 1 includes a memory rail 3 fixed to said lower rail 2 and an L-shaped frame 5 fixed to the top face of the upper rail 4. A guiding shaft 6 is supported by the memory rail 3 and disposed into a memory retaining runner 7. The memory retaining runner 7 also engages with the memory rail 3 so as to be slidable on the memory rail 3 in the longitudinal direction.

The memory retaining runner 7 is engageable with multiple bores 8 which are formed in the memory rail 3 by means of a memory lock 9 which receives a biasing force from a first spring (not shown). The memory retaining runner 7 is engageable with an end portion of a first link 10 which is a locking link and which is rotatably supported on a sidewall portion (i.e. a portion extending in a vertical direction in Fig. 1) of the frame 5 by a sixth pin 20. In addition, the memory retaining runner 7 is held so as to be constantly biased in the forwards direction by a second spring 33 whose end engages with the end portion of the memory rail 3. That is, the memory retaining runner 7 is slidable along the guiding shaft 6 and the memory rail 3 and receives a force from the second spring 33 biasing it in the forwards direction along the guiding shaft 6. However, sliding of the memory retaining runner along the guiding shaft 6 is prevented when the memory lock 9 engages with one of the bores 8 in the memory rail 3 or the first link 10 contacts the memory retaining runner 7.

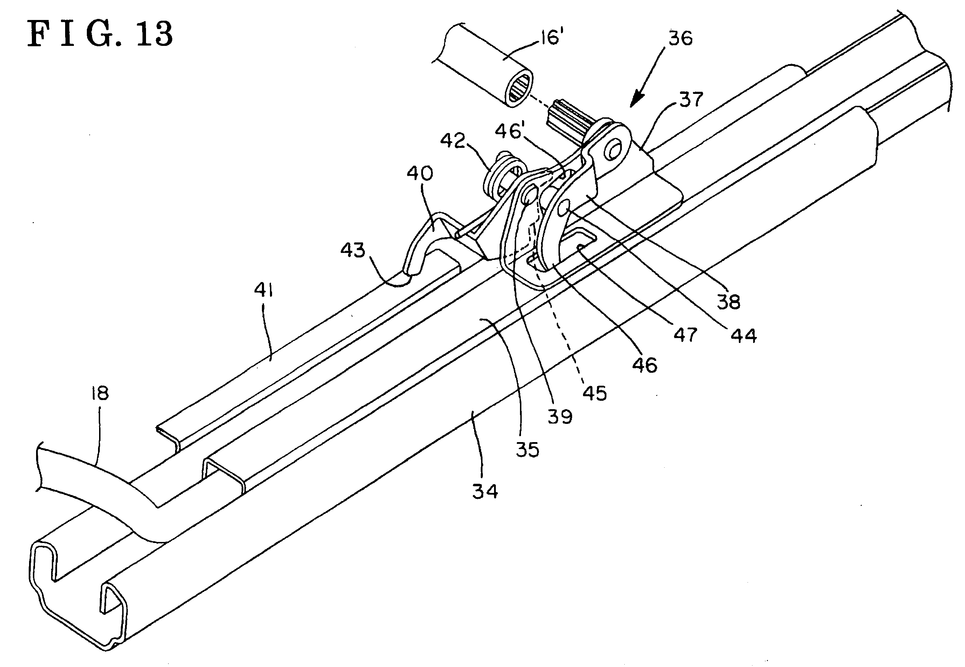

A second link 11 is provided at a rear end portion of the frame 5 and a third link 12, which includes an elongated bore 13 and has a first pin 29 fixed to it, is provided along the sidewall portion of the frame 5 at a horizontal distance with the second link 11. The second link 11 is integrally connected to the third link 12 by means of a fourth pin 14. The second link 11 is also connected to the back of the seat 31 by an attaching means 48 in such a manner that when the back of the seat 31 is tilted forwards the second link 11 is pulled in the diretion of arrow A (see Fig. 2). In addition, a fifth pin 15, which is rotatably connected to the frame 5, is positioned through the elongated bore 13 of the third link 12 and is rotatably connected to the second link 11. Furthermore, there is a fourth link 17, which is an operating link and which is rotatably connected to the frame 5 by the rod 16', and the operating force of which is transmitted by means of rods 16 and 16' to the link mechanism 36 (see Fig. 13) and which has fixed to it a second pin 28. The fourth link 17 receives a biasing force from a third spring (not shown) and includes an operating portion 19 at one end that makes contact with the operating handle 18. There is also a sixth link 23 which is rotatably connected to the rod 16 and which may make contact with the memory lock 9.

The memory and lock mechansim 1 also includes a fifth link 21 that includes a two-stepped portion 22 and is rotatably connected to the frame 5 by means of a sixth pin 20. There is also an elongated seventh link 24 with an elongated bore 25 formed at one end portion. The seventh link 24 is supported by, and rotatably connected to the second link 11 by, a third pin 26 positioned within the elongated bore 25 and is also rotatably connected to a seventh pin 27 provided at a front end portion of the fifth link 21.

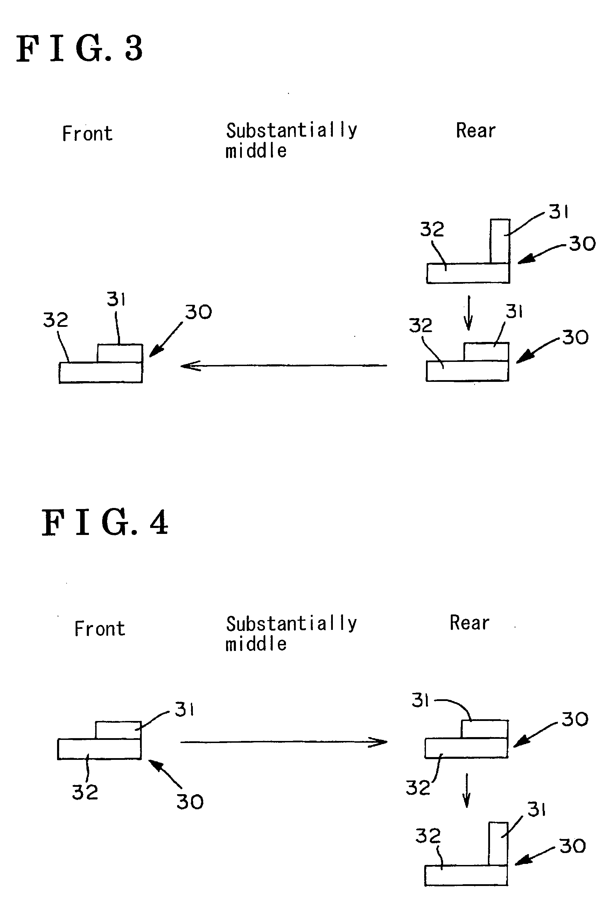

A forward movement and a restoring movement of a seat 30 for a walk-in operation are explained referring to Figs. 3 to 5. As shown in Fig. 3 prior to the forward movement of a seat 30 positioned in the rear position, the back of the seat 31 is tilted in the forward direction, i.e. folded towards the seat cushion 32. The seat 30 is then moved in the forward direction.

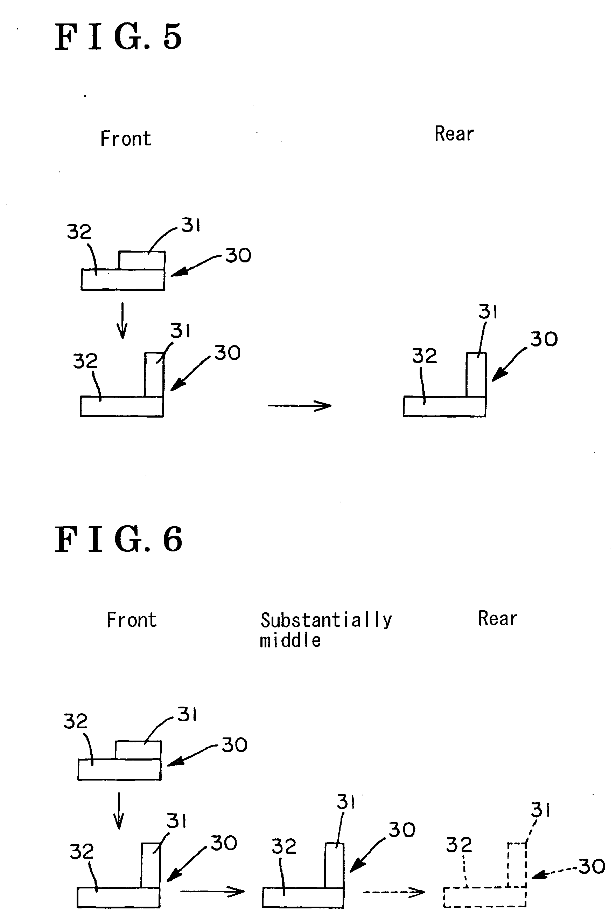

After the walk-in operation is completed, i.e. a passenger has accessed or left a rear seat, the position of the seat 30 can be restored to the original seating position using either of the restoring patterns shown in Fig. 4 or Fig. 5. According to the example of restoring pattern of the seat 30 shown in Fig. 4, the position of the seat 30 is restored to the original seating position with the back of the seat 31 being tilted forward and then the back of the seat 31 is returned to the upright position. According to the example of resorting pattern of the seat 30 shown in Fig. 5, the back of the seat 31 is first returned to the upright position then the seat 30 is returned to the original seating position.

Moving the seat 30 forward from its original position may be achieved in two ways. Either the seat 30 may be moved forward to facilitate walk in operation by tilting the back of the seat 31 forwards, or the memory position of the seat 30 may be altered by manually operating the operating handle 18 then moving the seat 30.

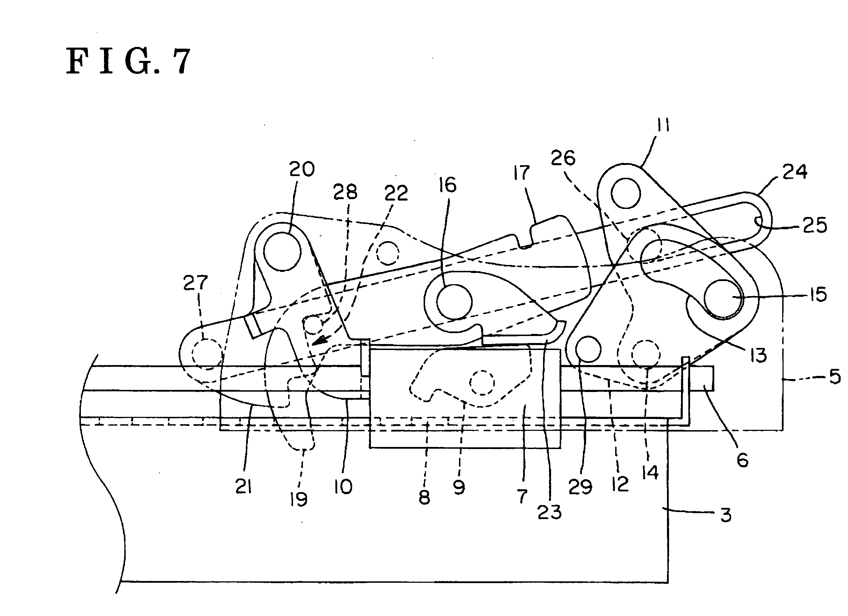

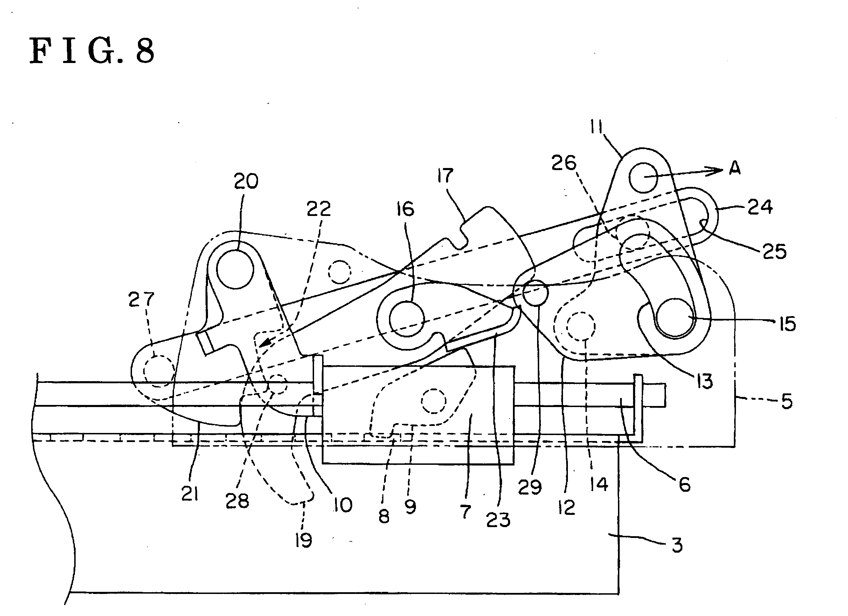

The mechanism of the forward movement of the seat 30 for walk-in operation, as shown in Fig. 3, is explained referring to Figs. 7 to 9. When the back of the seat 31 is tilted forwards, the second link 11 is pulled in the direction of arrow A as shown in Fig. 8. This rotates the second link 11 in the clockwise direction about the fifth pin 15. Since the third link 12 is integrally connected to the second link 11, the third link 12 is also rotated in the clockwise direction about the fifth pin 15, thereby causing the first pin 29 to raise the rear end of the fourth link 17. This rotation of the fourth link 17 in the anticlockwise direction about the rod 16 causes the operating portion 19 to push down the operating handle 18 (see Fig. 2). The downward movement of the operating handle 18 releases the engagement of the upper rail 4 with the lower rails 2 so as to permit the upper rail 4 to slide relative to the lower rail 2. Additionally, the rotation of the fourth link 17 in the anticlockwise direction also causes the sixth link 23 to rotate in the anticlockwise direction about the rod 16, this enables the memory lock 9 to also rotate in the anticlockwise direction, under the biasing force of the first spring (not shown), and engage with a bore 8. Thus, the memory retaining runner 7 is then prevented from moving on the memory rail 3 and the original position of the seat 30 is stored (i.e. memory function).

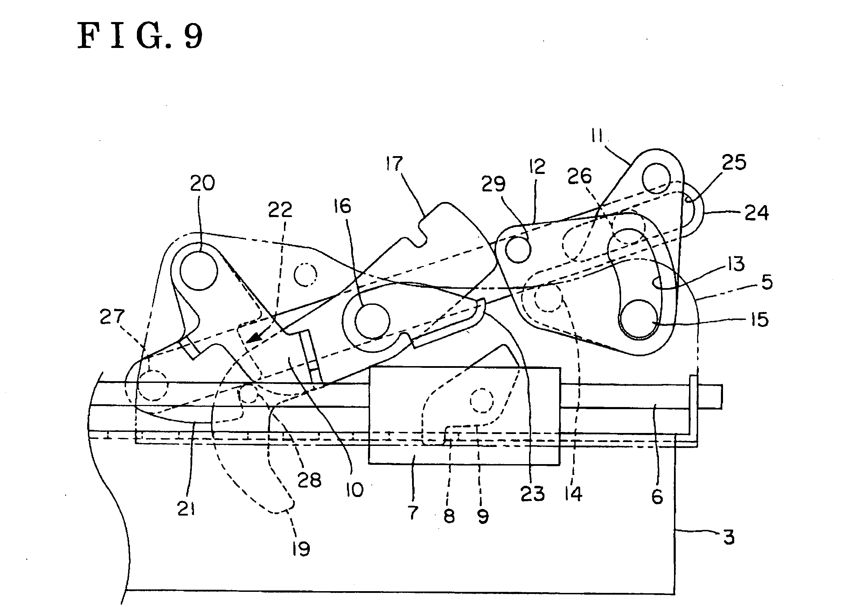

Furthermore, when the fourth link 17 is rotated in the anticlockwise direction, the second pin 28, which is fixed to the fourth link 17, engages with the fifth link 21, which is integrally fixed to the first link 10. The second pin 28 engages with the lower step of the two-stepped portion 22 of the fifth link 21 as shown in Fig. 9. As a result, the fourth link 17, which is biased to return to its initial position by means of the biasing force of the third spring (not shown), is maintained at the position shown in Fig. 9. The seat 30 may then be slid in the forward direction (see Fig. 3) to enable walk-in operation.

Alternatively if the seat needs to be moved forward only to adjust the memory position of the seat this is achieved, without tilting the back of the seat forwards, by manual operation of the operating handle. Firstly, the operating handle is moved downwards manually to enable the upper rail 4 to slide relative to the lower rail, thus the seat may be slid forwards. Additionally, the downward movement of the operating handle 18 causes the fourth link 17 to rotate in the anticlockwise direction about the rod 16 by means of the biasing force of the third spring (not shown). That is, the operating portion 19 of the fourth link 17 follows the movement of the operating handle 18.

In the normal state of the seat 3, as shown in Fig. 7, the biasing force of the second spring 33 urges the memory retaining runner 7 into contact with the first link 10. Therefore in this state the memory retaining runner 7 is held in position on the memory rail 3, which is fixed to the lower rail 2, even though the memory lock 9 is not engaged in a bore 8. However when the upper rail 4 is disengaged from the lower rail 2 by means of manual operation of the operating handle 18 and the seat 30 is slid, the frame 5 moves in conjunction with the upper rail 4 and the seat 30 and the first link 10 is moved in conjunction with the frame 5. This movement of the first link 10 slides the memory retaining runner 7 relative to the memory rail 3. When the seat 30 reaches the desired position and the operating handle 18 is released the memory and lock mechansim 1 returns to the state shown in Fig. 7 and the memory retaining runner 7 is held in its new position on the memory rail 3. In this way the memory position of the seat 30 may be altered.

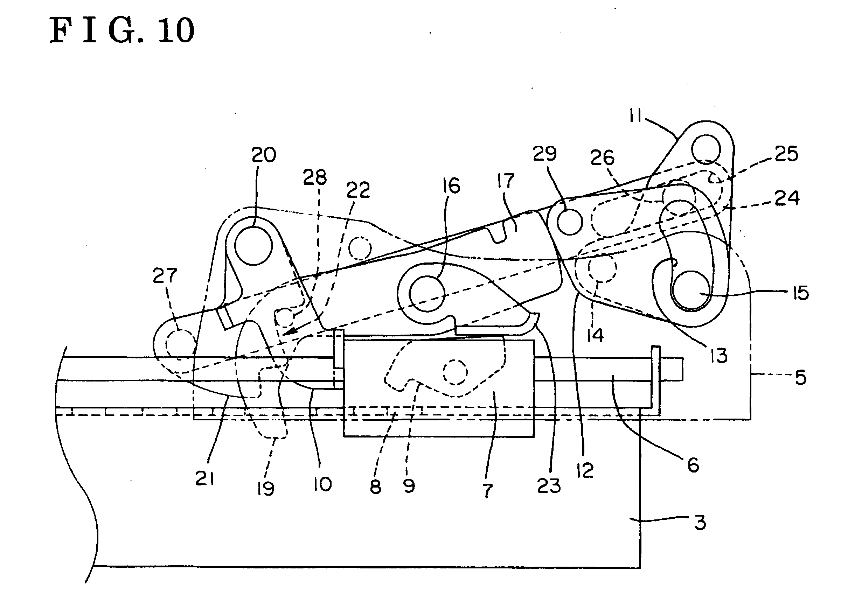

One method of restoring the original seat position, which is performed after the completion of the walk-in operation, will be explained with reference to Figs. 4, 10 and 11. According to this method of restoring the original seat position the seat, with the back of the seat 31 tilted forward, is moved back to the memory position (original position), then the upper rail 4 engages with (i.e. is locked to) the lower rail 2 and finally the back of the seat 31 is returned to the upright position. As shown in Fig. 10 the first link 10 makes contact with the memory retaining runner 7 just before the seat 30 reaches the memory position. At the point the first link 10 contacts the memory retaining runner 7 it is rotated in the clockwise direction about the sixth pin 20. As the first link 10 is integrally connected to the fifth link 21 this rotation releases the engagement between the second pin 28 (which is on the fourth link 17) and the lower step of the two-stepped portion 22 of the fifth link 21. Thus the fourth link 17 rotates back to its initial position under the biasing force applied by the third spring (not shown). As the sixth link 23 is integrally connected to the fourth link 17 it is also rotated in the same direction. This rotation of the sixth link 23 causes it to contact the memory lock 9, rotating it in the clockwise direction and disengaging it from the bore 8. That is, the storage of the seat position is cancelled and the memory retaining runner 7 is then held in position alongside the frame 5 by means of the first link 10 and the second spring 33 (see Figs. 1 and 2). At this point the memory and lock mechansim 1 is in the state shown in Fig. 10.

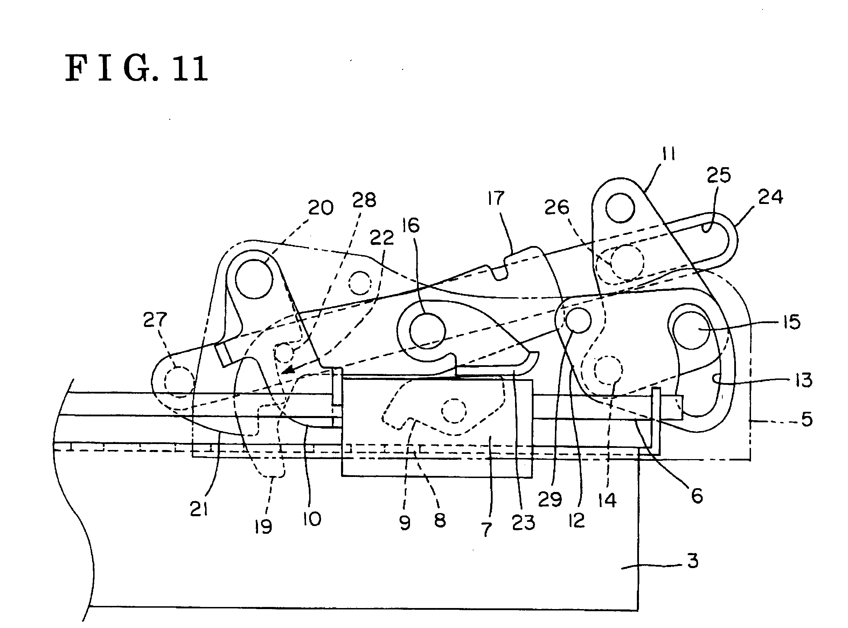

The fourth link 17 returning to its initial position enables the operating handle 18 to move upwards and return to a locked position thereby re-engaging the upper rail 4 with the lower rail 2. When the back of the seat 31 is then returned to the upright position (see Fig. 4) the second link 11 is rotated anticlockwise by means of a fourth spring (not shown) and returns to its initial position (see Fig. 7). Before this occurs the third link 12 is in contact with the rear end portion of the fourth link 17, however when the second link 11 returns to its initial position, the third link 12 also rotates about the fifth pin 15 by means of the fourth spring and returns to its initial position. Thus the memory and lock mechansim 1 returns to its original state as shown in Fig. 11.

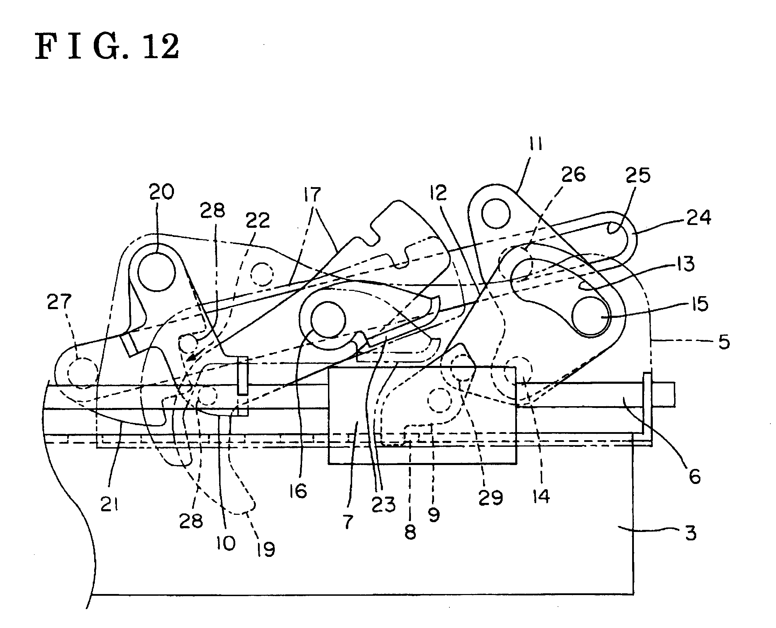

Next another method of restoring the original seat position, which is performed after the completion of the walk-in operation, will be explained with reference to Figs. 5 and 12 and ignoring the action of the link mechanism 36, which will be explained later. According to this method of restoring the original seat position the seat first has its back 31 returned to the upright position and then the seat 30 is moved back to the (original) memory position.

As shown in Fig. 12, when the back of the seat 31 is returned to the upright position, the second link 11 and the third link 12 are both rotated in the anticlockwise direction by the biasing force of the fourth spring so as to return to their respective initial positions. During this rotation the third pin 26, which is in contact with one end of the elongated bore 25, by pushing the seventh link 24 forcedly rotates the fifth link 21 in the clockwise direction about the sixth pin 20. This causes the second pin 28 of the fourth link 17 to disengage from the stepped portion 22 of the fifth link 21, thus the fourth link 17 and the sixth link 23 are free to rotate and are returned, by the biasing force of the third spring, to their initial state (shown by a double-dashed line in Fig. 12).

The aforementioned state of the seat 30 with the back of the seat 31 upright, as shown in Fig. 12, is different from the normal state, shown in Fig. 7, in that the memory lock 9 is engaged with a bore 8 in this state. However, the upper rail 4 still engages with the lower rail 2. Then, the upper rail 4 is moved to the memory position through the normal operation, i.e. by manually operating the operating handle 18 so that the memory lock 9 disengages from the bore 8. The memory retaining runner 7 is held on the frame 5 side (i.e. a movable frame side) by means of the first link 10 and the second spring 33. The normal state of the seat 30 (i.e. the upper rail 4 engaged with the lower rail 2) is obtained accordingly.

Next, the link mechanism 36 is explained with reference to Figs. 13 and 14. The link mechanism 36 is assembled on the other one of the pair of upper rails 35, which is slidable relative to the other one of the pair of lower rails 34, The link mechanism 36 includes an L-shaped frame 37 fixed to a top face of the upper rail 35, an eighth link 38 serving as a sub-link that is integrally connected to one end of the rod 16' and rotatably supported by the frame 37, a ninth link 40 serving as a sub-link that is rotatably supported on the frame 37 by means of a eighth pin 39, and a bracket 41, which is a fixed rail, attached to, and provided on the inner side of the lower rail 34 and which extends from a substantially middle portion to a front portion of the lower rail 34. The ninth link 40 is biased by a fifth spring 42 so that a contact piece 43 formed on one end of the ninth link 40 contacts the top face of the bracket 41. The eighth link 38 includes a ninth pin 44 that is in contact with stepped portions 45 and 45' of the ninth link 40 so as to control the rotation of the ninth link 40.

As shown in Fig. 14, the frame 37 includes a cam slot 46' which is substantially L-shaped and within which the ninth pin 44 is positioned. Operation of the eighth link 38 following the rotation of the rod 16' is guided and restricted by the cam slot 46'. The stepped portions 45 and 45' of the eight link 38 can make contact with the ninth pin 44 and as such the profile formed by the stepped portions 45 and 45' in conjunction with each other has a shape for matching the locus of movement of the ninth pin 44.

A contact piece 46 formed on one end of the eighth link 38 can enter or exit from an opening 47 formed on the top face of the upper rail 35. The contact piece 46 makes contact with the operating handle 18', which is situated in the space between the upper rail 35 and the lower rail 34 (and so can not be manually operated), and may move the operating handle 18' thereby controlling the engagement/disengagement of the upper rail 35 relative to the lower rail 34. When the upper rail 35 is moved forward and the contact piece 43 of the ninth link 40 is moved out of contact with the top face of the bracket 41, the ninth link 40 is rotated in the anticlockwise direction (as viewed in Fig. 13) about the eighth pin 39. However, this movement of the ninth link 40 is restricted by contact between the ninth pin 44 and the stepped portions 45 and 45' of the ninth link 40.

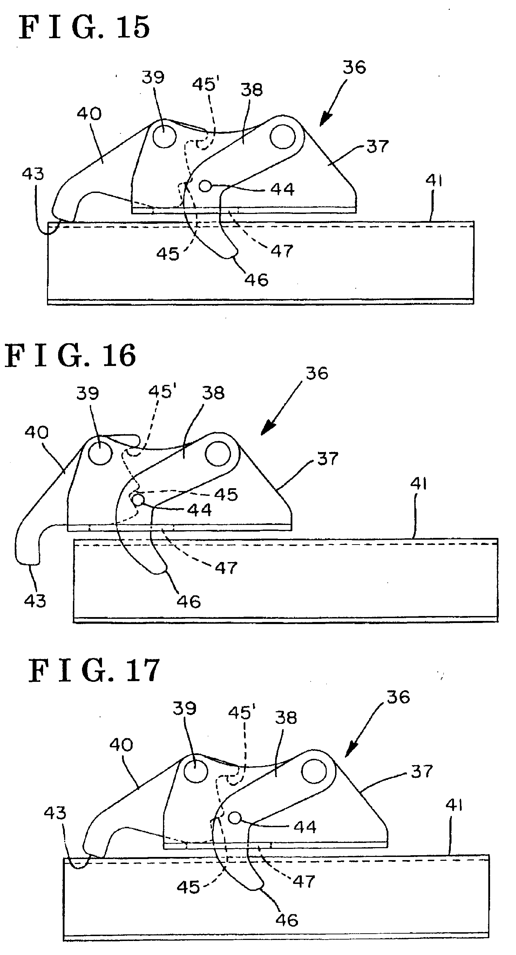

The forward movement and the restoring movement of the seat 30 in relation to walk-in operation and the operation of the link mechanism 36 are now explained with reference to Figs. 15 to 19.

As described above tilting forward the back of the seat 31 causes rotation of the fourth link 17 of the memory and lock mechansim 1 in the anticlockwise direction (as viewed in Fig. 2). This also rotates the rod 16' in the same direction which thus rotates the eighth link 38 of the link mechanism 36 in the anticlockwise direction as shown in Fig. 15. The operating handle 18' is then pushed down by the contact piece 46 of the eighth link 38, thereby disengaging the upper rail 35 from the lower rail 34. Additionally the ninth pin 44 is moved out of contact with the stepped portion 45' and thus the ninth pin 44 no longer prevents rotation of the ninth link 40 about the eighth pin 39. However, in the state shown in Fig. 15, the contact piece 43 is in contact with the top face of the bracket 41 and thus the rotation of the ninth link 40 is still restricted.

The forward movement of the seat 30 corresponds to the forward movement of the upper rail 35 as this movable rail supports the seat 30. Accordingly, during such forward movement the contact piece 43 of the ninth link 40 is eventually moved forward of the bracket 41. At this point the ninth link 40 is then able to rotate in the anticlockwise direction and rotates until its stepped portion 45 comes into contact with the ninth pin 44. The ninth link 40 is then maintained in the position shown in Fig. 16. In the state shown in Fig. 16, the upper rails 4 and 35 are in the unlocked state relative to the lower rails 2 and 34. That is, the upper rails 4 and 35 are always in the unlocked state relative to the lower rails 2 and 34 when the seat is moved to the forward position. The upper rails 4 and 35 may not be locked to the lower rails 2 and 34 by manual operation of the operating handle 18 because such operation is restricted. This is because the ninth pin 44 of the eighth link 38 is in contact with the stepped portion 45 of the ninth link 40, this holds the eighth link 38 in position and the contact portion 46 of the eighth link thus directly prevents the operating handle 18' from being raised. As the operating handle 18' can not be raised neither can the operating handle 18 and the lower rails 2 and 34 can not be locked relative to the upper rails 4 and 35.

When the seat 30 is moved backwards with the back of the seat 31 tilted forward, as shown in Fig. 3, the contact piece 43 of the ninth link 40 is raised on to the top face of the bracket 41 when the back of the seat 31 reaches the middle portion of the lower rail 34. Accordingly, the stepped portion 45 of the ninth link 40 pushes down the ninth pin 44, thereby generating the state shown in Fig. 17. In the state shown in Fig. 17 the eighth link 38 remains at a position that keeps the upper rails 4 and 35 unlocked relative to the lower rails 2 and 34. When the position of the seat 30 is moved back to the memory position and then the operating handle 18 is operated, the fourth link 17 and the eighth link 38 are rotated so as to acquire the locked state between the upper rails 3 and 35, and the lower rails 2 and 34.

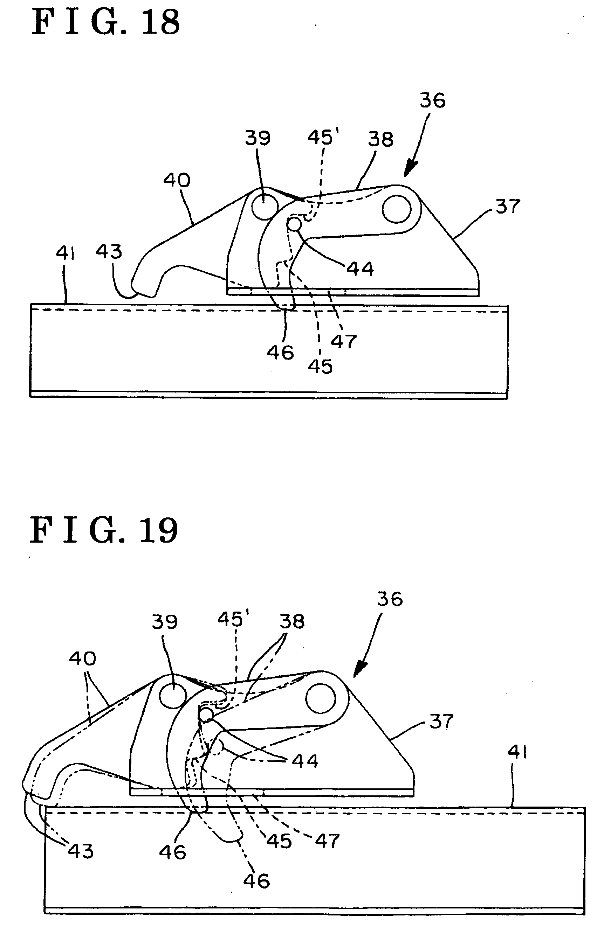

The operation shown in Fig. 6 is explained with reference to Fig. 19. According to this operation, the position of the seat 30 is restored to the original seating position with the back of the seat 30 in the upright position. In this case, the seat 30 is stopped in a substantially middle portion on the lower rail 34 and then moved further rearward, if necessary, by means of a normal operation, i.e. by manually operating the operating handle 18. As explained above when the back of the seat 31 is returned to its original position the memory and lock mechansim 1 in isolation operates in the following manner; the engagement between the fifth link 21 and the second pin 28 is released since the seventh link 24 forcedly operates the fifth link 21 and the fourth link 17 no longer pushes down the operating handle 18 (see Fig. 10). However, in this case the contact piece 43 of the ninth link 40 of the link mechanism 36 is not in contact with the top face of the bracket 41 and thus the contact piece 46 of the eighth link 38 remains in position, pushing down the operating handle 18'. Accordingly, the rod 16' maintains the fourth link 17 in a position in which it is pushing down the operating handle 18. Thus, in this case the memory and lock mechansim 1 does not operate as it would in isolation and the upper rails 4 and 35 and the lower rails 2 and 34 remain in the unlocked position. The seat 30 can thus be moved backward from the forward position as shown in Fig. 6 without manually operating the operating handle 18 even though the back of the seat 31 is in the upright position.

When the seat 30 is moved further backwards, past the position where the ninth link 40 comes into contact with the bracket 41, the contact piece 43 of the ninth link 40 is forced to rotate so that it is on the top face of the bracket 41 (see Fig. 19), i.e. the ninth link 40 is rotated in the clockwise direction. This causes the ninth pin 44 to separate from the stepped portion 45. This enables the eighth link to rotate in the clockwise direction until the ninth pin 44 contacts the stepped portion 45', releasing the operating handle 18'. The rotation of the eighth link 38 of the link mechanism also causes the fourth link 17 of the memory and lock mechansim 1 to rotate in the same manner as they are integrally attached by the rod 16'. This rotation of the fourth link 17 of the memory and lock mechansim 1 releases the operating handle 18. Thus, the operating handles 18 and 18' return to their original positions and cause the upper rails 4 and 35 to engage with the lower rails 2 and 34 respectively. In the above state, if the seat 30 is desired to move further backward, the operating handle 18 must be manually operated.

When the seat 30 is positioned forward relative to the middle portion of the lower rails 2 and 34, and then moved further forward after tilting forward the back of the seat 31 to facilitate walk-in operation, the memory retaining runner 7 is maintained in the middle portion of the lower rails 2 and 34. Therefore, by moving the seat 3 backward with the back of the seat 31 either tilted forward or in the upright position, the upper rails 4 and 35 engage with the lower rails 2 and 34 at the point where the memory retaining runner 7 is positioned.

According to the aforementioned embodiment of the memory and lock mechanism 1 the second to the seventh links are provided along the frame 5 with the seventh link 24 being provided at the most outside portion and along the longitudinal direction of the frame 5. Thus the links provided between the seventh link 24 and the frame 5 are protected from any external force that may be applied to the memory and lock mechansim 1.

Moreover, according to the aforementioned embodiment, the memory and lock mechansim 1 are provided on one of the pair of rails while the link mechanism 36 for preventing the operation of the lock/unlock mechanism is provided on the other one of the pair of rails. Thus, even though the seat 30 is equipped with a memory mechanism, the seat 30 can be returned to the middle portion of the rail from a forward position by an unlocked sliding operation even when the seat 30 has first been moved forward from a rearward position and the back of the seat 31 has then been returned to the upright position with the seat 30 in this forward position. Furthermore, when the seat 30 has been moved further forward from a substantially middle position or a forward portion during walk-in operation, the seat 30 may still be moved back to the middle portion in the unlocked state of the sliding operation without manual operation of the operating handle 18.

## Claims

1. A seat sliding device for a vehicle for unlocking or retaining an unlocked state of two movable rails (4,35) that support a seat (30), relative to two fixed rails (2,34), by tilting the back of the seat forwards or by operating an operating handle (18,18')
**characterized in that**
the seat sliding device comprises a link mechanism (36) provided at a pair of one (35) of the movable and one (34) of the fixed rails and a lock mechanism (1) provided at a pair of the other (4) of the movable and the other (2) of the fixed rails, said pairs of rails being parallel and separated by a predetermined distance; wherein after the seat (3) is moved in the forward direction with the back (31) of the seat (30) tilted forward, the link mechanism (36) makes the lock mechanism (1) inoperative so that the seat (30) can be moved in the rearward direction regardless of the state of the back (31) of the seat.

2. A seat sliding device according to claim 1 wherein said lock mechanism (1) further comprises a memory mechanism and is provided on the upper rail (4) slidable relative to a lower rail (2) fixed to a vehicle floor and includes an operating handle (18) for engaging or disengaging the upper rail (4) relative to the lower rail (2) so that the upper rail (4) and the lower rail (2) enter a locked state or an unlocked state, a frame (5) fixed to the upper rail (4) and a memory retaining runner (7) including a memory lock (9) that receives a biasing force from a biasing means and is slidable relative to a memory rail (3) in the longitudinal direction of the vehicle, wherein said memory retaining runner (7) is biased in the vehicle forward direction by a spring engaging with both said memory rail (3) and said memory retaining runner (7) and wherein the memory rail (3) is fixed to the lower rail (2) and contains a plurality of bores (8) used for memorizing a seat position,
**characterized in that**
the lock mechanism (1) further includes a first link (10) rotatably connected to the frame (5) and able to make contact with the memory retaining runner (7), a second link (11) and a third link (12) connected to the frame (5) by means of a fourth pin (14) and which may be rotated in a predetermined direction by tilting the back (31) of the seat (30) forwards; wherein the third link (12) has a first pin (29) fixed to it and includes an elongated bore (13) within which a fifth pin (15) is positioned; furthermore the lock mechanism also includes a fourth link (17) rotatably connected to the frame (5) by means of a rod (16) and including an operating portion (19) at one end which makes contact with the operating handle (18) and a portion at the opposing end which makes contact with the first pin (29); wherein the rod (16) is also rotatably connected to a sixth link (23) which is able to make contact with the memory lock (9) and wherein the lock mechanism (1) also includes a fifth link (21) rotatably connected to the frame and including a portion which makes contact with a second pin (28) which is fixed to the fourth link (17), and a seventh link (24) including an elongated bore (25) at one end which receives a third pin (26) which is connected to the second link (11) and wherein the opposing end of said seventh link (24) is rotatably connected to the fifth link (21).

3. A seat sliding device according to claim 2, wherein the memory and lock mechanism (1) operates such that when the back (31) of the seat (30) is returned to the upright position when the seat (30) is in a position forward of the memory retaining runner (7), the fourth link (17) and the fifth link (21) are rotated by operations of the second link (11) and the seventh link (24) respectively so that a locked state of the upper rail (4) relative to the lower rail (2) is achieved, and an unlocked state of the upper rail (4) relative to the lower rail (2) may then be obtained by operating the operating handle (18).

4. A seat sliding device according to claim 3, wherein the memory and lock mechanism (1) is such that the second link (11) and the third link (12) are connected by means of a fourth pin (14), and the second link (11) is rotatable relative to the fourth pin (14) by rotation of the fourth link (17) regardless of the locked state or the unlocked state of the upper rail (4) relative to the lower rail (2).

5. A seat sliding device according to claim 4, wherein the memory and lock mechanism (1) operates such that when the sixth link (23) disengages from the memory lock (9), the memory lock (9) engages with one of the bores (8) of the memory rail (3), causing the memory retaining runner (7) to be held by the memory rail (3) regardless of any movement of the seat (30).

6. A seat sliding device according to claim 1, wherein said link mechanism (36) includes an eighth link (38) held on the movable rail and a ninth link (40) held on the same movable rail and operating with the eighth link (38), wherein one end (43) of the ninth link (40) is engageable and disengageable relative to a bracket (41) and wherein said end (43) of said ninth link (40) is disengaged from the bracket (41) by the forward movement of the seat (30).

7. A seat sliding device according to claim 6, wherein said bracket (41) extends from a substantially middle portion to a front portion of the fixed rail (34).

8. A seat sliding device for a vehicle according to claim 1 wherein said lock mechanism (1) is also a memory mechanism and includes a memory retaining runner (7) provided at a fixed rail (2) so as to be slidable in the longitudinal direction thereof and to which a memory lock (9), which is engagable relative to the fixed rail (2) in response to a movement of an operating link (17), is rotatably connected and a frame (5) fixed to a movable rail (4) and rotatably connected to the operating link (17) and a locking link (10), which is rotatably connected to the frame (5), **characterized in that** one end of said operating link (17) interlocks with an operating handle (18) for engaging or disengaging the movable rail (4) relative to the fixed rail (2), and the other end of the operating link (17) interlocks with the back (31) of said seat (30) in such a manner that said operating link (17) is operated by the tilting of said back (31) of said seat (30); wherein the memory retaining runner (7) is connected to a spring (33) for biasing the memory retaining runner (7) in a predetermined direction and is able to make contact with said locking link (10) such that the memory retaining runner (7) is held on the movable rail (4) by said locking link (10) and said spring (33) and is also held on the fixed rail when the memory retaining runner (7) engages with a memory rail (3) which is provided at the fixed rail (2).
